# EUROPEAN PATENT SPECIFICATION

(11) **EP 3 455 520 B1**
(45) Date of publication and mention of the grant of the patent: **02.12.2020**
(21) Application number: 17729198.6
(22) Date of filing: 11.05.2017
(51) Int. Cl.: F16G 13/16, H02G 11/00

(54) **ARTICULATED ENERGY CHAIN**
GELENKIGE ENERGIEKETTE
CHAÎNE D'ÉNERGIE ARTICULÉE

(30) Priority: 12.05.2016 IT UA20163371
(43) Date of publication of application: 20.03.2019
(73) Proprietor: Findalto S.r.l., 20900 Monza (IT)
(72) Inventor: MAURI, Giovanni, 20900 Monza (MB) (IT)
(74) Representative: Sach, Greg Robert
(86) International application number: PCT/IB2017/052773
(87) International publication number: WO 2017/195148

(56) References cited:
- EP-A1- 0 875 695
- DE-U1- 20 305 677
- DE-U1-202012 001 760

## Description

The present invention refers to the field of energy chains, specifically for the types of energy chains suitable for the field of robotics and handling in the industrial field in general. Document DE 203 05 677 U1 discloses such an energy chain according to the preamble of claim 1.

Said chains or sheaths are particularly suitable for containing bundles of cables or flexible tubes, wherein said cables and/or tubes when in use are subjected to strong environmental impacts, namely they are subjected to rubbing or impacts with adjacent structures, or are used in difficult environments or in which they are continuously subjected to stresses due to use or to rubbing.

The market of interest here is that of handling on a plurality of axes, such as for example the field of operations by means of industrial robots o last generation workshops where the articulation and mechanical strength of said energy chains or sheaths are certainly one of the fundamental factors for the optimal mobility of said cables or tubes.

A plurality of energy chains that are suitable for said aims are known in the field; such chains can be more or less articulated or articulable and are preferably, but not exclusively, made of plastic materials that are resistant to shocks and wear. Said materials equally preferably, give a certain lightness to the energy chain a factor that is useful in such environments. Moreover, said chains preferably have chain links at least partially articulated movably between them.

In some embodiments said energy chains are made with links having a substantially round or rounded shape, that as is already known, to facilitate the sliding of the energy chains in the environments in which it is used and for the best housing of the cables in a round or rounded structure.

In particular, there are on the market energy chains that are made similar to a tube of large diameter, which can be opened or not, for example laterally, along the whole length of said tube. Some of the simplest of said cable devices are made in a single piece, but this, as it is known, makes it impossible to shorten to or extend said device, or to perform repairs if a cable or tube contained therein breaks down or also to inspect the inside of said device, etc.

Due to the wide diffusion of this problem in the majority of industrial sectors, the market has developed a variety of energy chains, for example, which can be articulated on multiple axis, and therefore have considerable flexibility, made for example with chain link elements having as said preferably circular shape, held together by means suitable for the purpose.

Some examples of sheaths or energy chains suitable for the field may be sheaths, for example, of substantially circular hollow sections, made totally closed or open in some areas and rigid, or openable by means of a slot made, for example, at least on one side of a chain link, or made of rigid material. Said chains, if they are of good design, are advantageous from the point of view of mechanical sealing, but either are not open as said, or allow only limited access to the space that houses the cables or tubes, making it difficult to insert said cables or tubes, and even more complicated a possible inspection in the event of malfunctions or breaking of one or more cables or tubes. Moreover these chains are definitely not very articulated in their movement.

The most used in the field of robotics are usually energy chains composed of several substantially circularly shaped links, held together between them; advantageously, in this way, the energy chain has a good articulation in movement, but one of the most critical aspects as it is known relates to the way that said links are held together to form the energy chain.

For example, there are solutions that use one or more ropes to keep the various chain steps united, which can be advantageous for the flexibility of the various elements, but not functional and difficult to handle when increase or decrease the number of steps is desired, since the length of the rope is predefined.

To have a chain of smaller length, the rope should be cut, while to have a longer length chain the rope should be replaced, with obvious burdens and costs as well as additional discomfort.

Again, if the rope breaks down, it would be necessary to replace the entire energy chain, moreover the mechanical sealing in such a chain is not usually very high, so excessive pulling stresses or unexpected ripping can easily lead to breaking.

Other energy chains dedicated to the same field of interest here, for example, may include a plurality of preferably circular chain links, for example, the various chain links may be held together by means of a mechanism operating substantially by pressure. In a particularly preferred known art example it is described an energy chain or cable sheath comprising open elements on the terminal sides pivotally held together and said chain elements can be mutually angled in at least two directions, said chain elements being placed in a row in the longitudinal direction of development of the cable carrier device forming a guide channel by means of guide elements placed radially outwards wherein joining elements are pivotally connected between them to absorb pulling force, said joints being internally connected to the chain made by said elements. This type of chain is described in a plurality of variants, which is particularly described in the prior art document here of interest, is that at least one swivel joint is designed in such a way that, for connection or disconnection from a following swivel element and therefore connect and disconnect the respective links between them, said joint is made in such a way as to join the links for insertion and disengagement of said joints into housings made on said links. To insert or disengage these joints, they must be angled at a particular angle with respect to the longitudinal axis of development of one or more cables housed in the device, corresponding to the conformation of the corresponding housing.

Said chain links would certainly be advantageous with regard to chain engagement/disengagement, since from a practical point of view such an engagement appears to be comfortable and simple, in fact it has been seen from experience and numerous field trials that a chain or cable sheath of this kind has in fact a poor mechanical strength. It has in fact been verified that in extreme working conditions the links of said particular chain have a tendency to disengage. Since, as mentioned above, particular angles of inclination between the joints of a preceding/subsequent element and the coupling area on the corresponding previous/subsequent link are needed, it occurs not too infrequently during the work phase, when the chain in addition to being subjected to traction is subjected to numerous torsional stresses and is suddenly compressed, or takes hits or the links mutually rotate the chain links by mistake, they can be tilted assuming quite easily the disengagement position. It appears obvious that a sudden disengagement of a chain portion from the other in a work phase can lead to significant negative consequences such as the block of the operating robot due to cable detachment or to a tear in the cables themselves if left without a sheath of and guide protection, with obvious economic consequences in terms of lost time, production stops, maintenance cost etc.

In particular, moreover being the bush connecting the steps of the chains as said engaged by pressure; since the chain operates on six axis, said type of connection, appears unreliable.

Additional disengagement problems also occur when the chain stops abruptly or is pulled too much; said junction type does not have enough mechanical holding strength and the bush, if the chain stops abruptly, tends to exit from the underline of the next link, disengaging from it; or, in the case of an abrupt rip, said bush tends to tear away from the underside of the next link on which it is attached.

It is quite apparent that such junction between the links causes a lot of problems to the user. Substantially, it has been verified on the field that snap couplings or fastenings of this kind do not provide great holding power.

For example, the prior art document DE20305677 U1, a German utility model, describes an energy chain comprising substantially circular chain links divided into one or two substantially rigid parts and comprise an element such as a bush which in a preferred embodiment remains coupled between said one or more rigid chain links, the bushes are mutually interconnected and together with the chain links form a substantially circular and articulated chain solid enough from the structural point of view, yet disadvantageously it is not possible to inspect the cables within said chain formed by said chain links without opening the links, substantially disassembling them, causing loss of continuity and solidity to the cable chain, in a variant it appears that the links can be pushed along the cables to reach certain cable areas, but even this way the cables are hard to inspect, the rigid links are easily subjected to breaking and the problem of the instability of housings inside the chain is not solved, nor the problem of replacing one or more cables within that chain without disassembling the chain. Still, in a further disadvantageous manner, in each of the embodiments described to somehow open the chain links, it is necessary to force said links with a screwdriver, at the expense of the wear of the link itself and of the risk of breaking them.

In one of the embodiments described, the chain is breakable if subject to abrupt but non excessive pulling forces.

An object of the present invention is to describe a device that solves the known art problems mentioned above.

It is therefore an object of the present invention to describe an energy chain device that can be disassembled and which allows the elongation or shortening of the chain without disassembling it

It is also a relevant object of the present invention to describe an energy chain device that can easily be inspected.

It is still a purpose of the present invention to describe an energy chain device that allows quick extraction of the cables or elements housed therein.

In particular, it is an object of the present invention to describe an energy chain device which allows to have a sealing joint in all directions of said chain, namely on multiple axes.

Yet another object of the present invention is to describe an energy chain device that offers good mechanical resistance to said chain during traction.

It is further a purpose of the present invention to describe an energy chain device that provides good mechanical resistance in any operating situation.

It is essentially a purpose of the present invention to describe an energy chain device with excellent articulation and mechanical strength in each direction of operation.

A further object of the present invention is to describe an energy chain device that is light and therefore does not add to the weight of the chain and the cables.

It is also an object of the present invention to describe an energy chain device that is easy to assemble and to disassemble.

It is still a relevant object of the present invention to optimize maintenance times of said energy chains.

It is still a purpose of the present invention to improve the durability overtime, thereby increasing the resistance and wear resistance of said energy chains.

It is finally a purpose of the present invention to describe an energy chain device that is simple to maintain and substantially economical to produce while maintaining high performance.

This and further objects will be realized by virtue of the hereby innovatively described energy chain or cable sheath articulated on a plurality of axes, comprising one or more chain links adapted to be hooked together, said chain links forming a chain or cable sheath articulated on more axes; said at least one chain link comprising in a particularly advantageous way at least a first joint having a substantially semispherical head and a terminal part comprising a housing suitable to house a substantially spherical head of a second joint, said one or more joints being suitable to form a spherical coupling between them. It is to be noted that in a particularly advantageous way at least one joint is housed in an housing realized in said chain link.

In particular, in an advantageous way said chain link comprises at least two link sides having a substantially semicircular crown shape, from said substantially semicircular crown a radial element is protruding comprising a housing realized on the terminal side of said radial element suitable to house at least a part of said joint.

Said at least one link is formed by at least two of said semicircular crowns, the longitudinal radial elements being suitable to be coupled by snapping in the housing zone of said joint, said joint in an advantageous way being blocked by snapping in said housing.

In an extremely advantageous manner, said joint is totally rotatable by 360 degrees within said housing of said second joint, and even more advantageously the head of said first joint is housed forming a spherical coupling with the terminal part of a second joint; said first joint is rotatably movable by 360 degrees inside the housing of said second joint even when said spherical coupling is blocked by the engagement of the two link sides comprising said radial longitudinal members comprising the engagement means, in this case the spherical coupling C is securely and solidly housed in said housing between said radial elements and formed by said radial elements and as said rotatably movable by 360 degrees.

In a further advantageous manner, said at least two link sides comprise means for allowing the engagement of said semicircular crowns forming the substantially circular chain link, said means being disposed on the circular crowns and being suitable to be coupled together.

It should be noted that in a very advantageous manner the snap coupling of the two radial link elements, where the spherical coupling formed by the two joints remains, securely locks the spherical coupling within said housing; in this way said coupling gives the chain an excellent and high mechanical strength regardless of the stress or stress direction to which said chain formed by said links is subjected. Said chain formed by said chain elements comprising said joints is thus movably articulated on each axis for each stress direction of said chain.

It should be noted further that, even more advantageously, said snap coupling allows the spherical coupling to move by 360 degrees, thus conferring the chain formed by said chain links an excellent articulation on six axes.

In a further advantageous way, in a further embodiment which allows all these advantages to be maintained, said at least two semicircular crowns form a single piece between them, said radial elements and at least one semispherical joint; in this way said chain link part can advantageously be printed in a single piece allowing economical saving in production. The lids and means and ways for moving and fastening the lids are substantially the same for each of the two preferred embodiments which will be described in detail below.

In said second embodiment, said substantially semispherical joints may include recesses on the "male" side of the spherical coupling, namely on the bush and recesses or corresponding carvings in the housing or "female" side for the head or bushing of the joint Note that the number and type of the recesses may vary depending on the chosen form of construction.

The assembly of the chain links will be described in more detail in the description of the attached figures.

It is of the utmost importance to note that said chain in a further advantageous way is removable in all its part at all times to allow replacement of chain elements that may be for example ruined, or to intervene, for example, on the cables housed in said chain or cable sheath realized with the links here innovatively described

Furthermore, it will be possible to shorten or to extend at any given time said chain without disassembling the whole chain, it will be sufficient to insert additional joints and further elements, for example of circular semi-crown shape, said link elements, forming as said a link, coupling the spherical couple formed by a first and a second joint between them.

In the variant in which the chain link is made substantially in one piece, apart from the lids that will advantageously be the same for both embodiments, the assembly will be even faster and the chain link resistance will definitely be high for each of the embodiments.

In both cases, in an extremely advantageous way, it will not be needed to press with a screwdriver or similar means on the chain link to disassemble it, which benefits the chain and the chain link robustness, along with the ease of assembly and disassembly, while maintaining the chain's strength, as well as the longer life of the chain links that are not subjected to wear and to the risk of breakage caused by the use of a tool to stress the structure.

Further, it should be noted that said chain links comprise one or more twist lock elements on the outer side of one or more semicircular elements, said two semicircular coupled elements forming a chain link. Said twist lock will be suitable to allow reciprocal rotation of the chain links in the orthogonal direction with respect to the positioning of the cables in the link only for example for a predetermined rotation angle, for example oscillating between 8 and 15 degrees, but this is not restrictive for the purpose of protecting the present invention, advantageously to prevent the chain links from rotating with each other, leading to the twisting of the cables in the chain; as it is known that twisting is always very negative as it could lead to malfunctions and breaks of the said cables.

Furthermore, said twist lock is intended to act as a coupling for mounting the chain links onto each other, having thus a twofold advantageous purpose. This variant will be described with reference to the attached figures.

In a further advantageous manner, said chain formed by said chain links is completely closed, thus providing an optimal protection to the elements, such as cables etc. housed therein, the lids, in this case in the form of semicircular crown shape, are openable.

### DESCRIPTION OF THE DRAWINGS

These and further advantages as well as variants and embodiments obtained by the innovative articulated chain on multiple axes described by the present invention will be further elaborated and described with reference to the accompanying drawings in which:
In fig. 1 it is represented a preferred embodiment of a spherical head joint made according to the present invention;
in fig. 2 it is represented a chain link made according to a preferred embodiment of the present invention in an open view;
in fig. 3 it is represented a particularly preferred embodiment of the chain link described in the present invention in a closed view;
in fig. 4 it is represented the union of two chain links made according to a preferred embodiment of the present invention;
in fig. 5 it is represented a preferred embodiment of the chain link described in the present invention in section;
in fig. 6 it is represented a part of a chain made with the innovative links described in the present invention in a preferred embodiment of links and open lids;
in fig. 7a,b,c,d it is represented a further preferred embodiment of the innovative chain link described in the present invention in various views;
in fig. 8 it is represented the assembly of the chain links according to the embodiment shown in figs. 7a,b,c,d;
in figs. 9a,b there are represented views of the chain links of the embodiment of Fig. 7;
and in fig. 10 it is represented a portion of a chain made with the innovative links described in the embodiment of fig. 7 of the present invention in a preferred embodiment of links and open lids.

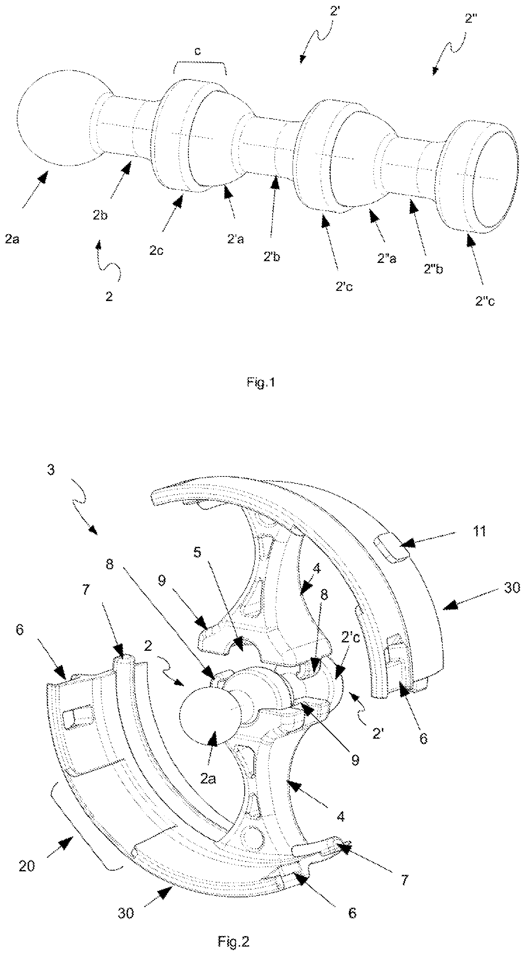

Referring to fig. 1 there is shown a preferred embodiment of a portion of the innovative energy chain 1 described herein; here three joints 2,2',2'' are represented each comprising a head 2a, a neck 2b, and a semispherical seat 2c. As can be seen from figure 1, said semispherical seat 2c is suitable for housing the head 2'a of the subsequent joint 2', said seat 2c is realized in such a way that the head 2'a of said subsequent joint can enter substantially up to a length equal to the radius of the spherical head of the joint in the semispherical seat. It should be noted that in a particularly advantageous way each of said heads of each of said joints 2,2',2" when housed in the semispherical seat 2c,2c' of the next coupling, form a spherical coupling C with said prior joint, said spherical coupling C in a particularly advantageous way allows the movement a 360 degrees of the joint whose head is inserted into the spherical seat of the subsequent joint; further advantages derived from said coupling type will be better described below with reference to the subsequent figures.

In particular, in fig. 2 it is represented a particularly preferred embodiment of an innovative link 3 of which the innovative articulated chain or cable sheath 1, as described by the present invention; in particular the chain link 3 here consists of two semicircular crowns 30, here in particular all the semicircular crowns 30 are equal to each other. In particular, advantageously said chain link 3 comprises at least two link sides of substantially semicircular shape 30, from said substantially semicircular shaped crown 30 protrudes at least one radial element 4 comprising at least one housing 5 on the terminal side of said radial element, adapted to house at least a portion of said joint 2,2'.

In particular, it is noted that said two semicircular crowns 30, equal to each other, are realized so that they can be joined together. The position that said semicircular crown elements 30 must assume in order to be joined together is essentially a position that includes a tipping by 180 degrees with respect to the symmetry axis of joint 2 and rotation of 180 degrees with respect to the radial element 4 of one of the two semicircular crown elements 30, which obviously implies that the two semicircular crowns 30 are so positioned so that they can engage with each other by means of the respective housing zones 6 and snap couplings 7.

The coupling operation also comprises locking the semispherical seat 2c of a first joint 2, in said semispherical seat, the head 2' of a second joint 2' is housed (which, as said, forms a spherical coupling C movable at 360 degrees) between the housing 5 of the radial elements 4. Said radial elements 4 further include on the terminal part of the radial element inserts 8 for engagement with suitable housings 9 made in correspondence with the reciprocal radial element 4, said radial elements 4, which are integral with the semicircular crown 30, are positioned as indicated above.

It should be noted that said semicircular chain elements 30 being advantageously equal to each other, as well as said joints 2,2' being substantially equal to each other, allow to create a chain that can be assembled easily in which also the replacement of pieces is extremely simple and rapid, as well as economically advantageous, this in the sector is a further substantial benefit; in practice with just two innovative pieces, an equally innovative cable chain is created.

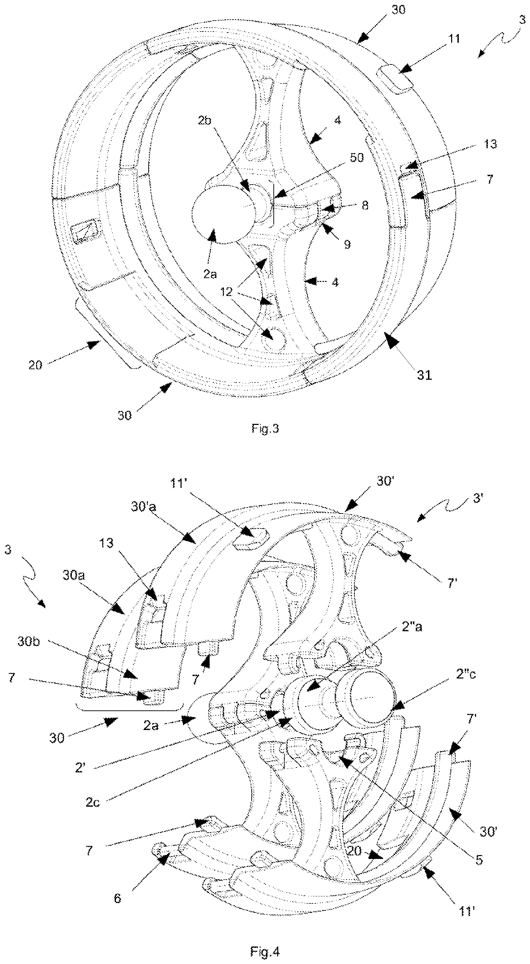

Figure 3 shows an innovative chain link 3 that will form in an equally innovative way the articulated energy chain 1 described in the present invention, in assembled form, enclosing at least one joint 2. It should be noted that in figure it is visible the head 2a of a joint 2, the neck 2b of said joint 2 remains outside the housing region 50 realized by the coupling of the two housing 5 of the radial elements 4. In said housing region, the semispherical seat 2c of said joint 2 is housed and in case that the chain links continue, there will be housed (not visible here in the figure) the head 2'a of a further joint 2'.

Further note that said radial elements 4 may include in some preferred embodiments, grooves 12 to lighten the structure of the chain link 3, thus in a further advantageous way said energy chain 1 formed by said chain links 3 will be lightweight, always a relevant factor as is known in the sector in object.

In fig. 3 it is further visible a twist lock element 11, placed as said, on the outer side of one or more semicircular elements 30. Said twist lock 11 will be capable of allowing reciprocal rotation of the chain links in the orthogonal direction with respect to the positioning of the cables in the link, for example with a reduced rotation angle defined according to the needs, for example of 10 degrees, but it may also be greater than that, without be limiting in any case on the object of the present invention. Said block 11 is advantageously capable of preventing chain links from rotating too much with respect to one another, leading to a twisting of the cables in the chain; as it is known a twisting is always very negative as it could lead to malfunctions and breaking of the said cables.

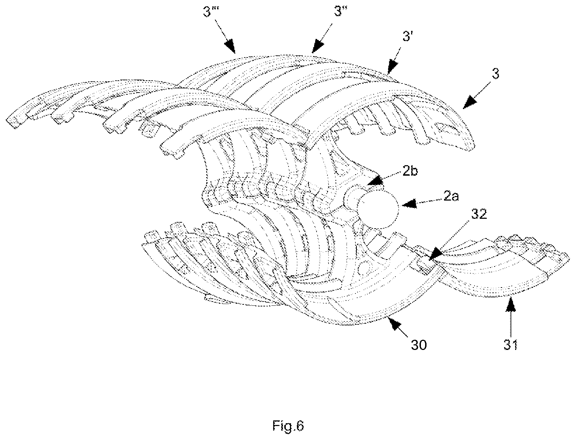

It should be noted further that the semicircular elements 30 of the chain links may be opened, for example by inserting a suitable instrument, such as a screwdriver, into the housing 13 as shown near the snap couplings 7 in the housing 6, said housing 13 for opening a part of said semicircular crown 30 may be an elongation of the housing 6. Said semicircular crowns 30 thus act as chain lids 3. (in fig. 6, said aspect will be described in detail).

It should be noted that the semicircular crown 30 comprises, namely it is formed in this embodiment, by two different semicircular zones, the one having a larger diameter 30a, comprises the housings 13, and 6 for the snap couplings 7 made on the smaller diameter area 30b.

Further, on the side of the semicircular crown of greater thickness 30a, a slot 20 is realized that follows the semicircular profile and delimits the movement zone of the twist lock 11 housed therein when the links are assembled. The circumferential extension of said slot 20 determines the degree of rotation between the two links connected to each other so that the smaller the circumference of the slot 20 is, the smaller will be the twisting angle allowed between the chain links 3 and vice versa. The twist lock 11 will be made on the lower thickness zone 30b.

Referring now to Figure 4, there are shown two chain links 3,3' of which the link 3 is closed on the semispherical seat 2c of joint 2, in the semispherical seat of joint 2 it is housed the spherical head 2'a of a joint 2', said joint 2' in turn will be housed in the chambers 5' of the semicircular elements 30'. It should be noted that in the figure, they are not yet closed, when said semicircular elements 30 'are closed they will form a snap junction system on the spherical coupling formed by the semispherical seat 2'c and by the head 2"a of a further joint 2'a. In this regard, it is noted that for each junction system there is a spherical coupling, so for each chain link a joint and a half is required.

In a particularly advantageous manner, therefore, the link is securely closed in several stages, the first real assembly of the link includes the closure of the snap coupling system on the spherical coupling 2c, 2c',2c',2c" and so on.

Said snap coupling system in a particularly advantageous and innovative manner, as mentioned above, allows to have a 360 degree pivoting for the movement of the spherical coupling and hence for the movement of the links connected in such a manner. This snap coupling system, which is absolutely advantageous and innovative, offers excellent mechanical resistance to forces in any direction, namely traction or compression or torsion forces.

It is also apparent that it is absolutely easy to assemble said chain links 3, and possibly to reduce the length of the chain 1, or to increase it according to the needs of the user.

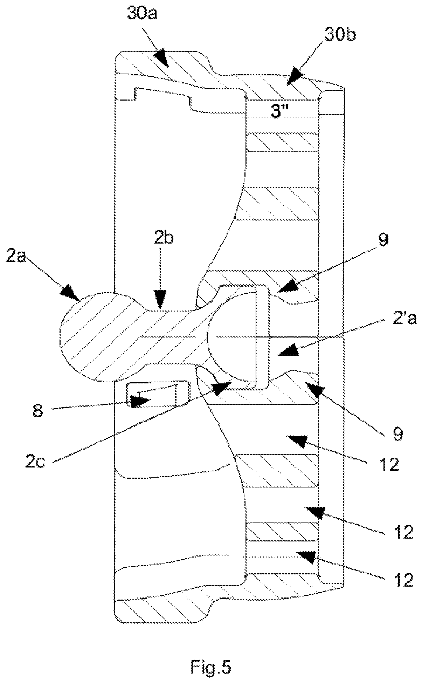

Figure 5 shows a sectional view of a fully closed chain link, i.e. with the snap coupling system closed on a spherical coupling 2c, 2c' and with the semicircular crowns further closed by snap coupling 7 with each other.

In particular, this representation highlights a housing 9 for an insert 8 to close the spherical coupling 2c, 2'c in the respective housings. It should be noted that in order to disengage said snap coupling or engagement system, it will be sufficient to use means similar to those that open the lids formed by the semicircular chain link elements 3, such as a screwdriver.

In figure 5, the grooves 12 are further evident for the overall lightening of the chain link structure 3, it is obvious that this is only a preferred embodiment of the chain link 3 comprising joints 2,2' that is possible for achieving the purpose of the present invention, therefore for example details such as grooves or means for opening the joints are subject to any variation that is legally possible and suitable for the purpose.

Finally in fig. 5, the difference in diameter of the zones 30a and 30b of the semicircular crowns 30 is well visible, the semicircular crown 30 is formed by two different zones, the one having a greater thickness 30a, comprising the housings 13, and 6 for the snap couplings 7 made on the lower thickness area 30b. In particular, the two zones form substantially one step in relation to each other. Each smaller diameter 30b area will fit when the links of the innovative energy chain 1 will be assembled and closed to remain movably housed under the larger diameter 30'a area of the previous chain link (in this view, seen differently it will be the subsequent chain link).

As mentioned above, and with reference to fig. 4 and 5, in this way the twist lock 11, for example, on each semicircular crown element 30b, will be accommodated in the corresponding slot in the zone 30'a of the semicircular element forming part of the link 3' facing the link 3 comprising said at least one (or more) twist locks 11 (here not visible, there are also visible for the same purpose in this preferred representation, the twist locks 11' on the semicircular elements 30 'of the link 3'

Finally, in figure 6 it is represented a part of an innovative energy chain 1 made with the innovative 3 links comprising said inventive snap coupling system comprising joints 2, described by the present invention; in particular, here are shown four links 3 assembled to form an articulated chain link 1, here the snap coupling or engagement system is clamped around the respective spherical couplings formed by the spherical housing 2c of a first joint and the spherical head 2'a of a second joint (here not visible) and so on. Specifically in fig. 6, the lids of the chain 1, which are in this case the openable semicircular crown elements 30, are all open, for example to allow convenient insertion or removal of the cables or tubes contained therein. Said lids can be opened jointly or mutually on each side without compromising the solidity of the chain link 3 which is, however, firmly held together by the radial elements 4 securely fastened together.

It should be noted in particular that each of said substantially semicircular crowns 30 is formed to this end by at least two elements 31 having the form of an arc of a circle of any extension, provided that are suitable to form said semicircular crown when assembled. Said at least two elements 31 are interconnected by means of, for example, a hinge 32 allowing to reciprocate the rotation of the elements 31 to allow the quick opening or closing of the elements 31 forming the further element 30 which in turn with the facing element 30 with which it is connected forms the innovative chain link 3. Referring to figure 6, a variant of a preferred embodiment of the chain link 3' described in the present invention is introduced, substantially having the same advantages and innovative details of the link variant 3, but having the following features detailed in figures from 7 to 10.

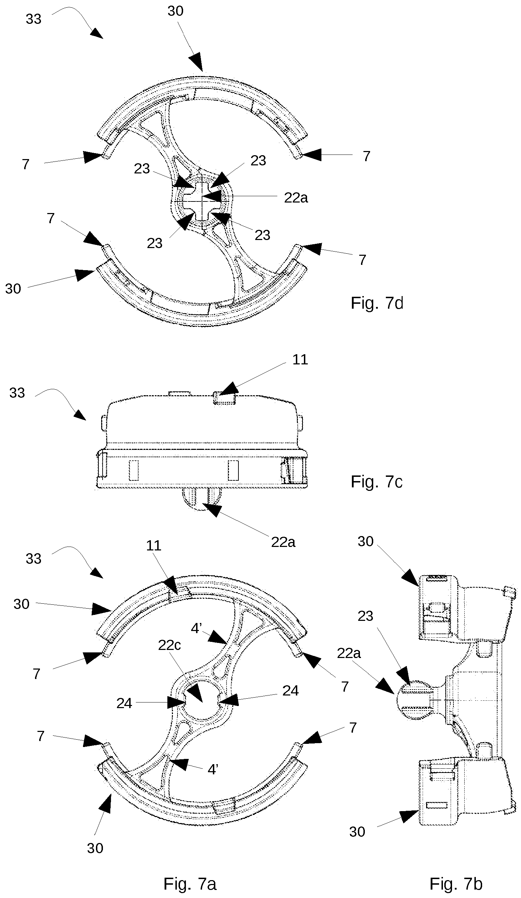

Referring to figures from 7a to 7d, in fig. 7a a variant of the innovative link 3 described above is represented, namely the link 3 comprising in particular the constituent elements such as substantially semicircular crowns 30' radial elements 4', housing zones 50, twist locks 11, elements 31 having substantially the form of an arc of a circle etc ... remain essentially the same, as well as the 360 degree articulation of chain links interconnected by joints 2, in this case joints 22.

In particular, it should be noted that in said variant advantageously the chain links 33 are substantially in a single piece comprising said at least two substantially semicircular crowns 30 and said at least two radial elements 4; in this case, the housings of said radial elements form a single housing area 50 in which it is included a joint 22 in the housing 50, printed in a single piece with said constituent elements herein. J oint 22, for example, is molded or is printed, for example, in a single piece within or with housing 50.

In this way, in a further advantageous way, chain link pieces 33 to be assembled are reduced benefitting from the simplicity and rapidity of assembly/disassembly and maintenance of the parts, as well as benefitting from reduced production costs. Structural solidity remains the same or is likely to be increased. In particular in fig. 7a, the back side of an innovative chain link 33 can be seen, so that the substantially semispherical seat or housing 22c, which comprises in this embodiment two recesses 24, is visible, preferably in some variants there may be present, depending on the form of realization, none, one or more recesses 24.

In fig. 7b, a side view of the chain link 33 is shown, without the substantially arc-shaped lids 31, which are the same as described above for the previous embodiment; In this view it is clearly visible the head 22a of the pivot or joint 22 comprising in this embodiment four recesses23, preferably in some variants there may be present, according to the embodiment, no one, or more recesses, 23 to engage with the seat 22'c of a subsequent joint 22'.

In fig. 7c, the chain link 33 is visible in a lateral view. In this case, the head 22a of the coupling 22 comprises in this embodiment preferably four recesses.

In fig. 7d a chain link 33 is visible in a front view, the elements obviously being the same as described with reference to fig. 7a with the difference of the housing 50 which is rigidly housed, or is made in a single piece with the coupling 22, that in this case shows the head 22a of the joint comprising said recesses 23. It should be noted that joints 22,22',22" etc. are preferably substantially equal to each other in order to allow complete interchanging of the links 33 as well as for the previous embodiment where links are completely interchangeable 3.

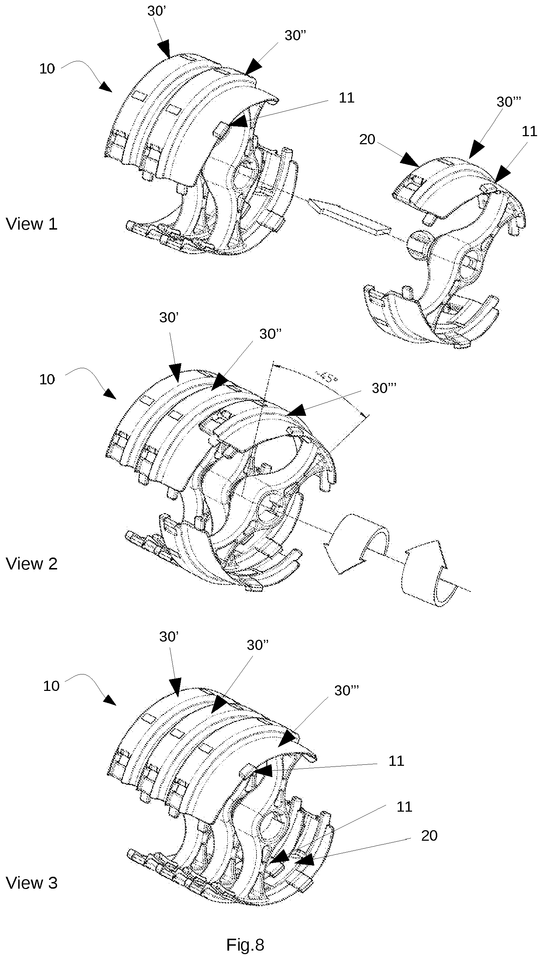

In fig. 8 it is represented in three steps by the highly innovative and convenient assembly of the chain links 33 made according to this embodiment; in particular it is represented a realistic perspective view of how the assembly of the innovative chains 33 is made that will compose the innovative variant of the energy chain 10 described in the present invention, in which, in view 1, there are shown two links 33',33" already assembled (here shown without lids 31 to facilitate the understanding of the mounting mechanism) in the rear view, that is, with visible the substantially semispherical housing or seat 22'c in which the head 22"a of the substantially semispherical joint 22" will be fitted being visible now dismantled. The arrow 3d of view 1 indicates the direction of inserting the link 33" into the link 33".

In view 2 it is shown the locking mechanism of a link 33'" with the previous link 33" (or successive depending on how the direction is defined, a non-influencing factor); in particular the head 22"a of the joint 22'" is inserted into the seat 22"c of the joint 22', in particular by matching at least two protrusion of the head 22'" with the relative (in this embodiment) two recesses 24 of the seat 22"c of the joint 22"', it is possible to insert the head of the joint 22'" with the seat of the previous joint 22". In practice, the recesses 24 act as guides for the protrusion of the heads 22a, 22'a, 22"a etc.

Then the chain link is rotated by a predetermined angle, for example, 45 degrees (angle merely indicative) to fit the head of joint 22" with the seat of joint 22"c. The lock angle is defined by the position of the twist lock 11, which in this case also acts as a lock for the engagement of the links with each other. Upon reaching an engagement position, namely view 3, the lids 31 are closed to properly hold the link 33 in the seat; from this position onwards the twist locks 11 always have the function described above (with reference to figures 1 to 6).

In this embodiment, therefore, the twist locks 11 further act as a block for the engagement of the links 33 and the closure of the lids 31 by permanently blocking the pins (22,2'.. etc) articulated in the seat without allowing for the release of the engagement mechanism described with reference to figure 8.

In a particularly advantageous way therefore the links are solidly interconnected by means of the joints 22 which effectively maintain the functioning of the spherical coupling, giving 360 degree articulation to the innovative energy chain 10, and further the closure of the lids 31 guarantees further safety to said closure and engagement mechanism.

It should be noted that in a particularly advantageous and innovative way, there will be articulated links 33 made by a single piece in this form of realization, which benefits from the simplicity of assembly and from the innovative possibility of having fully openable and inspecting links, for part or for the whole length of the chain 10 in order to be able to intervene on the contents and/or replace the cables without disassembling the energy chain itself with great advantage in terms of time and functional and economic advantage, in this case the links are substantially in one piece.

With regard to disassembly of one or more chain links 30,33, in a further advantageous way, no accessory tool (such as a screwdriver) is needed in this case and in the preceding embodiment; In fact, once the lids are opened, it will suffice to flex the chain link slightly to extract the twist locks 11 from the respective housing seats 20 (as explained in detail with reference to the previous figures) thus allowing the rotation of the link of a given angle to release it from the previous link, for example in the opposite direction (or in the same direction) to the locking, to disengage the head of the joint 22a'" with the seat 22"c of the previous joint, re-aligning the joint head with seat 22''c. The release angle can be, for example, 45 degrees.

It should be noted that in this embodiment preferably four recesses 22a of the joints 22 are formed in order to lock and/or unlock the head 22a from the seat 22c of the subsequent/previous coupling in each direction of rotation (represented by the arrows 3d in view 2, which concerns both fastening and disengagement movement). For this reason, the recesses 24 (or undercuts) of the head 22'c of the joint 22" serve to guide the head 22" of the joint 22'" when turning the locking link the substantially spherical heads 22"'a (22a generally of joints 22) go as undercuts.

In a further advantageous way, chain links are particularly resistant and robust and rarely subjected to the wear caused by the use of tools to open them, since in this case such tools are virtually unnecessary for the benefit of the life time of the chain and of ease of intervention on the same.

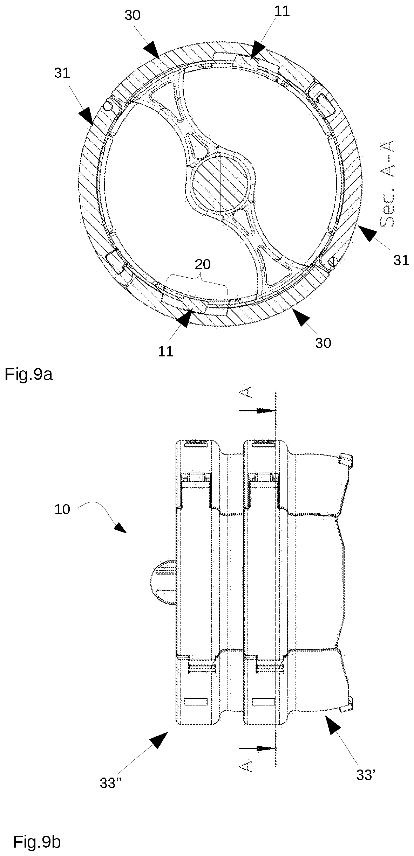

Figure 9a is a sectional view of the chain link of fig. 9b, with particular reference to the area of the twist locks 11 which in this presently advantageous embodiment also act as blocks for the secure engagement of the links 33 with each other; the twist lock 11 maintains its tolerance of approximately +/- 10 degrees for torsion and when the lids are closed prevents disassembly of the corresponding chain step as mentioned.

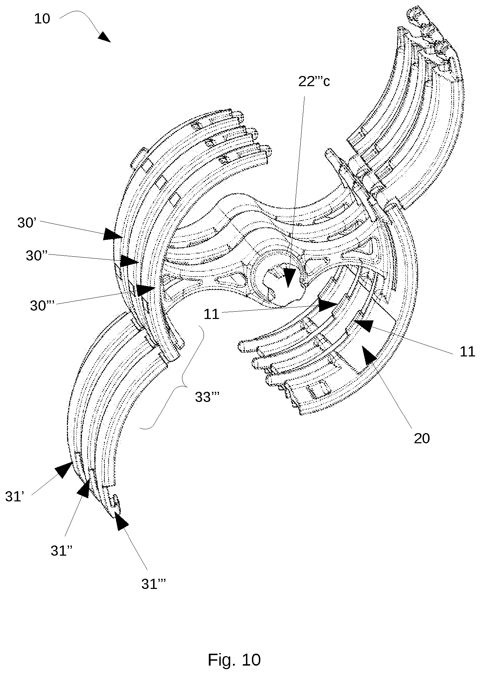

Finally, in figure 10, there is shown, for this particular preferred embodiment of the chain 10, the same view of Figure 6 for the form of embodiment 1 of the innovative chain; Said retaining cable chain 10 having the same technically advantageous details as the embodiments described with reference to Figures 7 to 9 and introducing some further advantageous and innovative aspects.

It will be apparent that the innovative energy chain or sheath 1,10 described herein, including chain links 3,33 comprising semicircular elements 30, lids 31 and joints 2,2',2",22,22',22" etc. may include a plurality of preferred variants and embodiments, for example link variants, number and type of locking means and release of joints, form of the joints, joint part inserted in the previous or subsequent joint, number of component parts of the chain link elements 30, number of elements 30 components of a chain link 3,33 depending on shape, twist locks, twist angle allowed by the twist lock and relative slot, type of blocks and joints 6,7,8,9, materials suitable for the purpose, number and shape of twisted locks present or not on the links 3,33, are all possible variants of preferred embodiments of the innovative energy chain or sheath operating on multiple axes and characterized by excellent mechanical resistance described by the present invention, as well as any further embodiment provided that it conforms to the described innovative features, are further embodiments of the invention comprised in the scope of protection of the energy chain or sheath operating over several axes described by the present invention, as further described in the appended claims.

## Claims

1. An articulated energy chain or cable sheath (1,10), comprising at least one or more chain links (3,33) adapted to be hooked together, said chain links (3,33) forming a chain or cable sheath (1,10) articulated on more axes, said at least one chain link (3,33) comprises at least two chain link sides, said chain link sides being at least two substantially semicircular crowns (30,30'..), from each of said substantially semicircular crowns (30,30') extends at least one radial element (4) forming with a second radial element (5) a housing (50) adapted to house at least a part of a first joint (2,22) and of a second joint (2',22') housed in said first joint (2,22), said joints (2,2'/22,22') forming a spherical coupling (C) rotatably movable housed in said housing (50), said chain comprising at least two of said substantially semicircular crowns (30), said chain being totally openable on each side, ***characterized in that*** said semicircular crowns (30) being suitable to act as semicircular lids for said chain link (3,33) and being openable singularly or jointly between them and comprising at least one twist lock (11) placed on the outer side of one or more semicircular elements (30,30',30"), is realized on a smaller diameter area (30b) of said semicircular crown (30,30'...) and is adapted to lodge in a slot (20) formed in a semicircular crown area of larger diameter (30'a) of said semicircular crown (30,30', 30"), said slot (20) follows the semicircular profile of the crown and delimits the area of movement of the twist lock (11) therein housed when the chain links (30,30',30"..) are assembled together closed.

2. The articulated energy chain or cable sheath (1), according to claim 1, wherein said at least one joint (2,22) comprises at least one substantially spherical head (2a,22a), a neck (2b,22b) and a substantially semispherical seat (2c,22c), said substantially semispherical seat (2c,22c) being able to accommodate the head (2'a,22a') of at least one second joint (2', 22), said spherical coupling (C) being rotatably adjustable on each axis for each stress direction of said chain (1,10).

3. The articulated energy chain or cable sheath (1), according to claims 1 and 2, wherein said seat (2c,22c) of said at least one first joint (2,22) is adapted to house the head (2'a,22a) of said successive joint up to a length substantially said coupling being adapted to allow said 360 degrees movable articulated junction, said coupling forming said spherical coupling (C).

4. The articulated energy chain or cable sheath (1), according to the preceding claims, wherein said substantially semicircular chain link sides (30,30',.) and said joints (2,2',2"...)(22,22',22"..) are substantially mutually equal to each other.

5. The articulated energy chain or cable sheath (1), according to the preceding claims, wherein said substantially semicircular crowns (30) are joined by snap coupling of said radial elements (4).

6. The articulated energy chain or cable sheath (10), according to the preceding claims wherein said chain links (33) comprising said substantially semicircular crowns (30) comprising said radial elements (4) are realized in one piece with at least a joint (22) in the housing (50).

7. The articulated energy chain or cable sheath (10), according to the preceding claims wherein said semicircular crowns further comprise housing (6) and snap couplings (7) for said housings (6) for joining said semicircular crowns (30).

8. The articulated energy chain or cable sheath (1,10), according to the preceding claims, wherein any of said substantially semicircular crowns (30) of said chain links (3,33) comprises at least two elements (31) having the form of an arc of circle, of any suitable extension to form said semicircular crown (30).

9. The articulated energy chain or cable sheath (1,10), according to the preceding claims wherein said at least two elements (31) are connected together by means of a hinge (32) adapted to allow the mutual rotation of the elements (31) to allow the opening or closing of the elements (31) forming the semicircular crown (30) which in turn forms, with the facing semicircular crown (30) to which it is connected said chain link (3) of said chain (1).

10. The articulated energy chain or cable sheath (1,10), according to the preceding claims, wherein said chain links (3,33) comprising said substantially semicircular crowns (30,30', 30") forming said chain (1) comprising said twist lock (11) being adapted to allow the mutual rotation between the chain links (3) in a reduced angle of rotation to prevent the chain links (3) to rotate with respect to each other beyond said predetermined angle to avoid twisting of the cables contained in the chain.

11. The articulated energy chain or cable sheath (1,10), according to the preceding claims, wherein said substantially semicircular crown (30) of said chain link (3,33) comprises at least two different semicircular zones of which one larger diameter zone (30a) and a smaller diameter zone (30b), each smaller diameter zone (30b) is adapted, when the chain links (3) of the cable chain (1) are assembled and closed, to remain movably housed under a larger diameter zone (30'a) of a preceding chain link (30'), the chain resulting fully closed.

12. The articulated energy chain or cable sheath (1,10), according to the preceding claims, wherein the substantially semi-spherical seat (22c) of the joint (22) comprises one or more recesses, or preferably two recesses (24) and the head (22a) of the joint (22) comprises one or more recesses, preferably four recesses (23) to engage with the seat (22'c) of the successive joint.

13. The articulated energy chain or cable sheath (10), according to the preceding claims, wherein the block/unblock of the chain links (33,33'..) comprising the insertion of the head (22'a) of the joint (22') in the seat (22c) of the joint (22), matching at least two protrusions of the head (22'a) with the relative recesses (24) of the seat (22c) of the joint (22), the locking of at least said head (22'a) with said seat (22c) being performed by means of rotation of the chain links (33) of a predefined angle, the twist lock(s) (11) further operating as a block for locking the chain links (33) each with the other, the closure of the lids (31) definitively blocking the pins (22,2'.. etc.) in an articulated fashion in their seat.

14. The articulated energy chain or cable sheath (10), according claim 6, wherein in order to unblock the links (33) from each other it is sufficient to open the lids (31) and flex the chain links (33) to disengage the twist locks (11) from the respective housing slots (20) in order to rotate said link (30) of a given angle to disengage it from the previous links indifferently in a contrary or in the same (22a') from the seat (22c) of the previous joint (22), re-aligning the head (22'a) of the joint (22') with the recesses (24) of the seat (22c).

## Patentansprüche

1. Eine Gelenk-Energiekette oder einen Kabelmantel (1,10), umfassend mindestens ein oder mehrere Kettenglieder (3,33), die zum Zusammenhängen geeignet sind, wobei die Kettenglieder (3,33) eine Kette oder einen Kabelmantel (1,10) bilden, auf mehr Achsen artikuliert, wobei mindestens ein Kettenglied (3,33) mindestens zwei Kettengliedseiten umfasst, wobei die Kettengliedseiten mindestens zwei im wesentlichen halbkreisförmige Kronen (30, 30'..) sind, jeder von diesen sind im wesentlichen halbkreisförmige Kronen (30, 30'..) sie erstrecken sich über mindestens ein radiales Element (4) und bilden mit einem zweiten radialen Element (5) ein Gehäuse (50), das geeignet ist, mindestens einen Teil eines ersten Gelenks (2,22) aufzunehmen, und eines zweiten Gelenks (2', 22'), das in dem ersten Gelenk (2,22) untergebracht ist, wobei die Gelenke (2,2'/ 22,22') eine Kugelkupplung (C) bilden, die drehbar beweglich in dem Gehäuse (50) untergebracht ist, wobei die Kette mindestens zwei der Seiten umfasst, **gekennzeichnet dadurch, dass** die halbkreisförmigen Kronen (30) geeignet sind, als halbkreisförmige Deckel für das Kettenglied (3,33) zu wirken und einzeln oder gemeinsam zwischen ihnen zu öffnen sind und mindestens eine Drehverriegelung (11) umfassen, die an der Außenseite von einer angeordnet ist oder mehr halbkreisförmige Elemente (30, 30', 30"), werden auf einer Fläche mit kleinerem Durchmesser (30b) der halbkreisförmigen Krone (30, 30',...) realisiert und sind so ausgelegt, dass sie in einem Schlitz (20) untergebracht werden können, gebildet in einem halbkreisförmigen Kronenbereich mit größerem Durchmesser (30'a) der halbkreisförmigen Krone (30, 30', 30"..), folgt der Schlitz (20) dem halbkreisförmigen Profil der Krone und begrenzt den Bewegungsbereich des Drehverschlusses (11) darin untergebracht, wenn die Kettenglieder (30,30', 30"..) geschlossen zusammengebaut sind.

2. Gelenkte Energiekette oder Kabelverbindung (1) nach Anspruch 1, wobei es mindestens ein Gelenk (2,22) mindestens einen im wesentlichen kugelförmigen Kopf (2a, 22a), einen Hals (2b, 22b) und einen im wesentlichen halbkugelförmigen Sitz (2c, 22c)umfasst, wobei der im wesentlichen halbkugelförmige Sitz (2c, 22c) den Kopf (2'a, 22a') eines Gelenks (2', 22) mit mindestens einer Sekunde aufnehmen kann, wobei die kugelförmige Kupplung (C) drehbar auf jeder Achse für jede Spannungsrichtung der Kette (1,10) einstellbar ist.

3. Gelenk-Energiekette oder Kabelmantel (1) nach Anspruch 1 und 2, wobei der Sitz (2c,22c) diese ist mindestens für eine erste Verbindung (2,22) zur Aufnahme des Kopfes (2'a,22a) geeignet, der aufeinanderfolgenden Verbindung bis zu einer wesentlichen Länge , wobei die Kupplung angepasst ist, um die um 360 Grad bewegliche Gelenkverbindung zu ermöglichen, wobei die Kupplung die speherische Kupplung (C) bildet.

4. Die artikulierte Energiekette oder Kabelhülle (1) gemäß den vorhergehenden Ansprüchen, wobei die wesentlichen halbkreisförmigen Kettengliedseiten (30, 30'..) und die Verbindungen (2,2', 2"...) (22, 22', 22"..) im wesentlichen einander gleich sind.

5. Die artikulierte Energiekette oder Kabelhülle (1) gemäß den vorhergehenden Ansprüchen, wobei die wesentlichen Kronen (30) durch Schnappkopplung von radialen Elementen (4) verbunden sind.

6. Die artikulierte Energiekette oder Kabelhülle (10) gemäß den vorhergehenden Ansprüchen, wobei die Kettenglieder (33), die die wesentlichen halbkreisförmigen Kronen (30) umfassen, die die radialen Elemente (4) umfassen, in einem Stück mit mindestens einer Verbindung (22) im Gehäuse (50) realisiert sind.

7. Die Gelenk-Energiekette oder Kabelmantel (10) gemäß den vorhergehenden Ansprüchen, wobei die halbkreisförmigen Kronen ferner ein Gehäuse (6) und Schnappkupplungen (7) für die Gehäuse (6) zum Verbinden der halbkreisförmigen Kronen (30) umfassen.

8. Die artikulierte Energiekette oder Kabelhülle (1,10) gemäß den vorhergehenden Ansprüchen, wobei eine der wesentlichen halbkreisförmigen Kronen (30) der Kettenglieder (3,33) mindestens zwei Elemente (31) mit der Form von einem Kreisbogen von beliebiger geeigneter Spannung umfasst, um die halbkreisförmige Krone (30) zu bilden.

9. Die artikulierte Energiekette oder Kabelhülle (1,10) gemäß den vorhergehenden Ansprüchen, wobei mindestens zwei Elemente (31) mittels eines Scharniers (32) miteinander verbunden sind, das so ausgelegt ist, dass es die gegenseitige Drehung der Elemente (31) ermöglicht, um das Öffnen oder Schließen der Elemente (31) zu ermöglichen, die die halbkreisförmige Krone (30) bilden, die sich wiederum bildet, wobei die gegenüberliegende halbkreisförmige Krone (30), mit der sie verbunden ist, das Kettenglied (3) dieser Kette (1) verbindet.

10. Die artikulierte Energiekette oder Kabelhülle (1,10) gemäß den vorhergehenden Ansprüchen, wobei die Kettenglieder (3,33) die wesentlichen halbkreisförmigen Kronen (30, 30 ', 30") umfassen, die die Kette (1) umfassend bilden, wobei die Drehverriegelung (11) angepasst ist, um die gegenseitige Drehung zwischen den Kettengliedern (3) in einem verringerten Drehwinkel zu ermöglichen, um zu verhindern, dass sich die Kettenglieder (3) über den vorbestimmten Winkel hinaus zueinander drehen, um ein Verdrehen der Kabel, die in der Kette enthalten sind, zu vermeiden.

11. Die Gelenk-Energiekette oder Kabelmantel (1,10) gemäß den vorhergehenden Ansprüchen, wobei die wesentliche halbkreisförmige Krone (30) des Kettenglieds (3,33) mindestens zwei verschiedene halbkreisförmige Zonen umfasst, eine Zone mit größerem Durchmesser (30a) und eine Zone mit kleinerem Durchmesser (30b), jede Zone wird mit einem kleinerem Durchmesser (30b) angepasst, wenn die Kettenglieder (3) der Kabelkette (1) zusammengebaut und geschlossen werden, um beweglich in einer Zone mit größerem Durchmesser (30'a) eines vorhergehenden Kettenglieds (30') zu sein, wobei die resultierende Kette vollständig geschlossen ist.

12. Die artikulierte Energiekette oder Kabelummantelung (1,10) gemäß den vorhergehenden Ansprüchen, wobei der wesentlichen halbkugelförmige Sitz (22c) der Verbindung (22) eine oder mehrere Aussparungen oder vorzugsweise zwei Aussparungen (24) und der Kopf (22a) des Gelenks (22) eine oder mehrere Aussparungen umfasst, vorzugsweise vier Aussparungen (23), um mit dem Sitz (22'c) des aufeinanderfolgenden Gelenks in Eingriff zu kommen.

13. Die artikulierte Energiekette oder Kabelhülle (10) gemäß den vorhergehenden Ansprüchen, wobei der Block / Entblock der Kettenglieder (33,33'..) das Einsetzen des Kopfes (22'a) der Verbindung umfasst (22') im Sitz (22c) des Gelenks (22), wobei mindestens zwei Vorsprünge des Kopfes (22'a) mit den relativen Aussparungen (24) des Sitzes (22c) des Gelenks (22) übereinstimmen, die das Verriegeln von mindestens einem Kopf (22'a), wobei der Sitz (22c) durch Drehen der Kettenglieder (33) um einen vordefinierten Winkel ausgeführt wird, wobei das Drehverschluss (11) ferner als Block zum Verriegeln der Kette der Verbindungen (33) miteinander bewirkt, wobei das Verschließen der Deckel (31) die Stifte (22,2'.. usw.) in ihrem artikulierten Sitz endgültig blockiert.

14. Die Gelenk-Energiekette oder Kabelmantel (10) nach Anspruch 6, wobei das Lösen der Glieder (33) voneinander ausreicht, die Deckel (31) zu öffnen und die Kettenglieder (33) zum Lösen der Drehverriegelungen (11) von den jeweiligen Gehäuseschlitzen (20) zu biegen, um das Glied (30) in einen gegebenen Winkel zu drehen, um es von den vorherigen Gliedern gegen den Uhrzeigersinn oder im Uhrzeigersinn (22a') vom Sitz (22c) des vorherigen Gelenks (22) zu lösen , wobei der Kopf (22'a) des Gelenks (22') mit den Aussparungen (24) des Sitzes (22c) neu ausgerichtet wird.

## Revendications

1. Une chaîne porte-câbles ou gaine de câbles articulée (1,10), comprenant au moins un ou plusieurs maillons de chaîne (3,33) adaptés pour être accrochés ensemble, lesdits maillons de chaîne (3,33) formant une gaine ou chaine de câbles (1,10) articulée sur plusieurs axes, ledit au moins un maillon de chaîne (3,33) comprend au moins deux côtés de maillon de chaîne, lesdits côtés de maillon de chaîne étant au moins deux couronnes sensiblement semi-circulaires (30, 30'..), à partir de chacune desdites couronnes sensiblement semi-circulaires (30,30') s'étend au moins un élément radial (4) formant avec un deuxième élément radial (5) un logement (50) adapté pour recevoir au moins une partie d'un premier joint (2,22) et d'un deuxième joint (2',22') logé dans ledit premier joint (2,22), lesdits joints (2,2'/22,22') formant un accouplement sphérique (C) mobile en rotation logé dans ledit boîtier (50), ladite chaîne comprenant au moins deux desdites couronnes sensiblement semi-circulaires (30), ladite chaîne pouvant être totalement ouverte de chaque côté, ***caractérisée en ce que*** lesdites couronnes semi-circulaires (30) sont aptes à servir de couvercles semi-circulaires pour ledit maillon de chaîne (3,33) et pouvant être ouverts individuellement ou conjointement entre eux et comprenant au moins un verrou tournant (11) placé du côté extérieur d'un ou plusieurs éléments semi-circulaires (30, 30', 30"), réalisé sur une zone de plus petit diamètre (30b) de ladite couronne semi-circulaire (30, 30'..) et adapté pour se loger dans une fente (20) formée dans une zone de la couronne semi-circulaire de plus grand diamètre (30'a) de ladite couronne semi-circulaire (30, 30', 30"), ladite fente (20) suit le profil semi-circulaire de la couronne et délimite la zone de mouvement du verrou tournant (11) qui y est logé lorsque les maillons de la chaîne (30,30', 30") sont assemblés et enfermés ensemble.

2. La chaîne porte-câbles ou gaine de câbles articulée (1), selon la revendication 1, dans laquelle ledit au moins un joint (2,22) comprend au moins une tête sensiblement sphérique (2a, 22a), un col (2b, 22b) et un siège sensiblement semi-sphérique (2c, 22c), ledit siège sensiblement sphérique (2c, 22c) pouvant accueillir la tête (2'a, 22a') d'au moins un deuxième joint (2', 22), ledit accouplement sphérique (C) étant réglable par rotation sur chaque axe pour chaque direction de contrainte de ladite chaine (1, 10).

3. La chaîne porte-câbles ou gaine de câbles articulée (1), selon les revendications 1 et 2, dans lesquelles ledit siège (2c, 22c) dudit au moins un premier joint (2, 22) est adapté pour loger la tête (2'a, 22a) dudit joint successif jusqu'à une longueur sensiblement dudit couplage étant adapté pour permettre ladite jonction articulée mobile à 360 degrés, ledit couplage formant ledit couplage sphérique (C).

4. La chaîne porte-câbles ou la gaine de câbles articulée (1), selon les revendications précédentes, dans lesquelles lesdits côtés de maillon de chaîne sensiblement semi-circulaires (30, 30',.) et lesdits joints (2,2', 2" ...) (22,22', 22") sont sensiblement mutuellement égaux les uns aux autres.

5. La chaîne porte-câbles ou gaine de câbles articulée (1), selon les revendications précédentes dans lesquelles lesdites couronnes sensiblement semi-circulaires (30) sont réunies par couplage par encliquetage desdits éléments radiaux (4).

6. La chaîne porte-câbles ou gaine de câbles articulée (10), selon les revendications précédentes dans lesquelles lesdits maillons de chaîne (33) comprenant lesdites couronnes sensiblement semi-circulaires (30) comprenant lesdits éléments radiaux (4) sont réalisés en une seule pièce avec au moins un joint (22) dans le logement (50).

7. La chaîne porte-câbles ou gaine de câbles articulée (10), selon les revendications précédentes, dans lesquelles lesdites couronnes semi-circulaires comprennent en outre un logement (6) et des couplages encliquetables (7) pour lesdits logements (6) pour joindre lesdites couronnes semi-circulaires (30).

8. La chaîne porte-câbles ou gaine de câbles articulée (1,10), selon les revendications précédentes, dans lesquelles l'une quelconque desdites couronnes sensiblement semi-circulaires (30) desdits maillons de chaîne (3,33) comprend au moins deux éléments (31) ayant la forme d'un arc de cercle, de toute extension appropriée pour former ladite couronne semi-circulaire (30).

9. La chaîne porte-câbles ou gaine de câbles articulée (1,10), selon les revendications précédentes dans lesquelles lesdits au moins deux éléments (31) sont reliés entre eux au moyen d'une charnière (32) adaptée pour permettre la rotation mutuelle des éléments (31) pour permettre l'ouverture ou la fermeture des éléments (31) formant la couronne semi-circulaire (30) qui se forme à son tour, avec la couronne semi-circulaire en vis-à-vis (30) à laquelle elle est reliée ledit maillon de chaîne (3) de ladite chaine (1).

10. La chaîne porte-câbles ou gaine de câbles articulée (1,10), selon les revendications précédentes, dans lesquelles lesdits maillons de chaine (3, 33) comprenant lesdites couronnes sensiblement semi-circulaires (30, 30', 30") formant ladite chaîne (1) comprenant ledit verrou tournant (11) étant adapté pour permettre la rotation mutuelle entre les maillons de chaine (3) dans un angle de rotation réduit pour empêcher les maillons de chaîne (3) de tourner l'un par rapport à l'autre au-delà dudit angle prédéterminé pour éviter la torsion des câbles contenus dans la chaîne.

11. La chaîne porte-câbles ou gaine de câbles articulée (1,10), selon les revendications précédentes, dans lesquelles ladite couronne sensiblement semi-circulaire (30) dudit maillon de chaîne (3,33) comprend au moins deux zones semi-circulaires différentes dont une zone de plus grand diamètre (30a) et une zone de plus petit diamètre (30b), chaque zone de plus petit diamètre (30b) est adaptée, lorsque les maillons de chaîne (3) de la chaîne de câbles (1) sont assemblés et fermés, pour rester logés de manière mobile sous une zone de plus grand diamètre (30'a) d'un maillon de chaîne précédent (30'), la chaîne résultant complètement fermée.

12. La chaîne porte-câbles ou gaine de câbles articulée (1,10), selon les revendications précédentes, dans lesquelles le siège sensiblement semi-sphérique (22c) du joint (22) comprend une ou plusieurs cavités, ou de préférence deux cavités (24) et la tête (22a) du joint (22) comprend une ou plusieurs cavités, de préférence quatre cavités (23) pour s'engager dans le siège (22'c) du joint successif.

13. La chaîne porte-câbles ou gaine de câbles articulée (10), selon les revendications précédentes, dans lesquelles le blocage / déblocage des maillons de chaîne (33,33'..) comprend l'insertion de la tête (22'a) du joint (22') dans le siège (22c) du joint (22), en faisant correspondre au moins deux saillies de la tête (22'a) avec les cavités relatives (24) du siège (22c) ou du joint (22), le verrouillage d'au moins ladite tête (22'a) avec ledit siège (22c) étant exécutée au moyen d'une rotation des maillons de chaîne (33) de l'angle prédéfini, le ou les verrous tournants (11) fonctionnant en outre comme un bloc pour le verrouillage des maillons de chaîne (33) l'un avec l'autre, la fermeture des couvercles (31) bloquant définitivement les goupilles (22,2'.. etc.) de manière articulée dans leur siège.

14. La chaîne porte-câbles ou gaine de câble articulée (10), selon la revendication 6, dans laquelle pour débloquer les maillons (33) les uns des autres, il suffit d'ouvrir les couvercles (31) et de fléchir les maillons de chaîne (33) pour désengager les verrous tournants (11) des fentes de logement respectives (20) afin de faire pivoter ledit maillon (30) d'un angle donné pour le désengager des maillons précédents indifféremment dans le sens contraire ou dans le même sens (22a') du siège (22c) du joint précédent (22), en réalignant la tête (22'a) du joint (22') avec les cavités (24) du siège (22c).
